# EUROPEAN PATENT APPLICATION

(11) **EP 4 624 544 A1**
(43) Date of publication of application: **01.10.2025**
(21) Application number: 25164400.1
(22) Date of filing: 18.03.2025
(51) Int. Cl.: C09J 133/06, C09J 7/38

(54) **PRESSURE-SENSITIVE ADHESIVE COMPOSITION AND PRESSURE-SENSITIVE ADHESIVE SHEET**

(30) Priority: 25.03.2024 JP 2024047976
(71) Applicant: NITTO DENKO CORPORATION, Ibaraki-shi Osaka 567-8680 (JP)
(72) Inventor: Matsuoka, Toru, Ibaraki-shi, Osaka, 567-8680 (JP); Shibano, Masaya, Ibaraki-shi, Osaka, 567-8680 (JP); Tanaka, Shota, Ibaraki-shi, Osaka, 567-8680 (JP)
(74) Representative: Hoffmann Eitle

(57) **Abstract**

Provided is a pressure-sensitive adhesive composition for producing a pressure-sensitive adhesive sheet suitable for reducing the amount of the stratum corneum exfoliated when the sheet is peeled off from skin. The pressure-sensitive adhesive composition includes: a (meth)acrylic polymer containing a constituent unit U1 derived from a first (meth)acrylic acid alkyl ester having an alkyl group having 1 to 7 carbon atoms, a constituent unit U2 derived from a second (meth)acrylic acid alkyl ester having an alkyl group having 8 to 12 carbon atoms, and a constituent unit U3 derived from a carboxyl group-containing monomer; a nonionic emulsifier; and an organic liquid component containing a carboxylic acid ester.

## Description

### BACKGROUND OF THE INVENTION

### 1. Field of the Invention

The present invention relates to a pressure-sensitive adhesive composition and a pressure-sensitive adhesive sheet.

### 2. Description of Related Art

As an example of a pressure-sensitive adhesive sheet, a medical pressure-sensitive adhesive sheet that is attached to skin or the like and used has been known. The medical pressure-sensitive adhesive sheet is used for the purposes of protection of an affected area, percutaneous absorption of a drug, fixation of gauze or a tube, and the like. Such pressure-sensitive adhesive sheet generally includes a pressure-sensitive adhesive layer, and the pressure-sensitive adhesive sheet can be attached to skin or the like via the pressure-sensitive adhesive layer.

The pressure-sensitive adhesive layer included in the pressure-sensitive adhesive sheet can be formed by curing a pressure-sensitive adhesive composition including a polymer. For example, in JP 4763416 B2, there is a disclosure of, as a material for a pressure-sensitive adhesive layer, an emulsion-type acrylic pressure-sensitive adhesive including a (meth)acrylic polymer.

### SUMMARY OF THE INVENTION

When the pressure-sensitive adhesive sheet is peeled off from skin, the stratum corneum of the skin is exfoliated by the pressure-sensitive adhesive sheet, and thus the skin is liable to be damaged. The pressure-sensitive adhesive sheet produced by using a related-art pressure-sensitive adhesive composition has room for improvement regarding the amount of the stratum corneum exfoliated when the sheet is peeled off from the skin.

An object of the present invention is to provide a pressure-sensitive adhesive composition for producing a pressure-sensitive adhesive sheet suitable for reducing the amount of the stratum corneum exfoliated when the sheet is peeled off from skin.

According to at least one embodiment of the present invention, there is provided a pressure-sensitive adhesive composition including: a (meth)acrylic polymer including a constituent unit U1 derived from a first (meth)acrylic acid alkyl ester having an alkyl group having 1 to 7 carbon atoms, a constituent unit U2 derived from a second (meth)acrylic acid alkyl ester having an alkyl group having 8 to 12 carbon atoms, and a constituent unit U3 derived from a carboxyl group-containing monomer; a nonionic emulsifier; and an organic liquid component including a carboxylic acid ester.

Further, according to at least one embodiment of the present invention, there is provided a pressure-sensitive adhesive sheet including a pressure-sensitive adhesive layer formed from the above-mentioned pressure-sensitive adhesive composition.

According to at least one embodiment of the present invention, there can be provided the pressure-sensitive adhesive composition for producing a pressure-sensitive adhesive sheet suitable for reducing the amount of the stratum corneum exfoliated when the sheet is peeled off from skin.

### BRIEF DESCRIPTION OF THE DRAWING

FIG. 1 is a cross-sectional view for schematically illustrating a pressure-sensitive adhesive sheet according to one embodiment of the present invention.
FIG. 2 is a diagram for describing a test for measuring the moisture permeability of a pressure-sensitive adhesive layer.

### DETAILED DESCRIPTION OF THE INVENTION

A pressure-sensitive adhesive composition according to a first aspect of the present invention includes: a (meth)acrylic polymer containing a constituent unit U1 derived from a first (meth)acrylic acid alkyl ester having an alkyl group having 1 to 7 carbon atoms, a constituent unit U2 derived from a second (meth)acrylic acid alkyl ester having an alkyl group having 8 to 12 carbon atoms, and a constituent unit U3 derived from a carboxyl group-containing monomer; a nonionic emulsifier; and an organic liquid component containing a carboxylic acid ester.

In a second aspect of the present invention, for example, in the pressure-sensitive adhesive composition according to the first aspect, a blending amount of the organic liquid component is from 40 parts by weight to 80 parts by weight with respect to 100 parts by weight of the (meth)acrylic polymer.

In a third aspect of the present invention, for example, in the pressure-sensitive adhesive composition according to the first or second aspect, the organic liquid component contains glyceryl tricaprylate.

In a fourth aspect of the present invention, for example, in the pressure-sensitive adhesive composition according to any one of the first to third aspects, the alkyl group of the second (meth)acrylic acid alkyl ester has 9 to 12 carbon atoms.

In a fifth aspect of the present invention, for example, in the pressure-sensitive adhesive composition according to any one of the first to fourth aspects, the second (meth)acrylic acid alkyl ester contains at least one selected from the group consisting of: 2-ethylhexyl acrylate; n-octyl acrylate; isononyl acrylate; isodecyl acrylate; and n-dodecyl acrylate.

In a sixth aspect of the present invention, for example, in the pressure-sensitive adhesive composition according to any one of the first to fifth aspects, the alkyl group of the first (meth)acrylic acid alkyl ester has 1 to 5 carbon atoms.

In a seventh aspect of the present invention, for example, in the pressure-sensitive adhesive composition according to any one of the first to sixth aspects, the first (meth)acrylic acid alkyl ester contains at least one selected from the group consisting of: n-butyl acrylate; and isobutyl acrylate.

In an eighth aspect of the present invention, for example, in the pressure-sensitive adhesive composition according to any one of the first to seventh aspects, the carboxyl group-containing monomer contains acrylic acid.

In a ninth aspect of the present invention, for example, in the pressure-sensitive adhesive composition according to any one of the first to eighth aspects, a content ratio of the constituent unit U3 in the (meth)acrylic polymer is from 2 wt% to 4 wt%.

In a tenth aspect of the present invention, for example, the pressure-sensitive adhesive composition according to any one of the first to ninth aspects further includes an anionic emulsifier.

In an eleventh aspect of the present invention, for example, in the pressure-sensitive adhesive composition according to the tenth aspect, at least one selected from the group consisting of: the anionic emulsifier; and the nonionic emulsifier has a polymerizable group.

In a twelfth aspect of the present invention, for example, in the pressure-sensitive adhesive composition according to the tenth or eleventh aspect, at least one selected from the group consisting of: the anionic emulsifier; and the nonionic emulsifier has an oxyethylene group, and an average number of moles of the oxyethylene group added is 10 or more.

In a thirteenth aspect of the present invention, for example, in the pressure-sensitive adhesive composition according to any one of the tenth to twelfth aspects, the anionic emulsifier contains an alkyl sulfate ester salt.

In a fourteenth aspect of the present invention, for example, in the pressure-sensitive adhesive composition according to any one of the tenth to thirteenth aspects, a blending amount of the anionic emulsifier is 1 part by weight or more with respect to 100 parts by weight of the (meth)acrylic polymer.

In a fifteenth aspect of the present invention, for example, in the pressure-sensitive adhesive composition according to any one of the first to fourteenth aspects, the nonionic emulsifier contains a polyoxyethylene-1-(allyloxymethyl) alkyl ether.

In a sixteenth aspect of the present invention, for example, in the pressure-sensitive adhesive composition according to any one of the first to fifteenth aspects, a blending amount of the nonionic emulsifier is 3 parts by weight or more with respect to 100 parts by weight of the (meth)acrylic polymer.

A pressure-sensitive adhesive sheet according to a seventeenth aspect of the present invention includes a pressure-sensitive adhesive layer formed from the pressure-sensitive adhesive composition according to any one of the first to sixteenth aspects.

Details of the present invention are described below, but the following description is not intended to limit the present invention to a certain embodiment.

### <Embodiment of Pressure-Sensitive Adhesive Composition>

A pressure-sensitive adhesive composition according to at least one embodiment of the present invention includes a (meth)acrylic polymer, a nonionic emulsifier, and an organic liquid component. The (meth)acrylic polymer contains a constituent unit U1 derived from a first (meth)acrylic acid alkyl ester having an alkyl group having 1 to 7 carbon atoms, a constituent unit U2 derived from a second (meth)acrylic acid alkyl ester having an alkyl group having 8 to 12 carbon atoms, and a constituent unit U3 derived from a carboxyl group-containing monomer. The organic liquid component contains a carboxylic acid ester. The term "(meth)acryl" as used herein means "acryl" and/or "methacryl".

According to investigations made by the inventors of the present invention, a pressure-sensitive adhesive sheet produced by using a pressure-sensitive adhesive composition including a combination of the above-mentioned components is suitable for reducing the amount of the stratum corneum exfoliated when the sheet is peeled off from skin.

The pressure-sensitive adhesive composition according to the at least one embodiment may further include an anionic emulsifier in addition to the above-mentioned components.

### [(Meth)acrylic Polymer]

In the at least one embodiment, the (meth)acrylic polymer is preferably emulsified in the pressure-sensitive adhesive composition. The pressure-sensitive adhesive composition may include water as a dispersion medium, and the (meth)acrylic polymer may be emulsified in the water, as an example. Herein, the (meth)acrylic polymer emulsified in water is sometimes referred to as "water dispersion-type polymer." The pressure-sensitive adhesive composition including the emulsified (meth)acrylic polymer is sometimes referred to as "emulsion-type pressure-sensitive adhesive composition."

The (meth)acrylic polymer may be emulsified in the pressure-sensitive adhesive composition so as to have a particulate shape. In other words, the pressure-sensitive adhesive composition may include particles of the (meth)acrylic polymer. The particles of the (meth)acrylic polymer may be present as single particles (primary particles) without aggregating in the pressure-sensitive adhesive composition, or may aggregate in the pressure-sensitive adhesive composition to form aggregates. The particles may each be a core-shell type having a core and a shell covering the core.

As described above, the (meth)acrylic polymer is a copolymer containing the constituent units U1 to U3. Examples of the copolymer include a random copolymer, a block copolymer, and a graft copolymer. The pressure-sensitive adhesive composition may include two or more kinds of the (meth)acrylic polymer.

The first (meth)acrylic acid alkyl ester has an alkyl group having 1 to 7 carbon atoms as described above. The number of carbon atoms of the alkyl group in the first (meth)acrylic acid alkyl ester is preferably 6 or less, and may be 5 or less, or 4 or less. The lower limit of the number of carbon atoms of the alkyl group may be 2 or more. The number of carbon atoms of the alkyl group is preferably from 1 to 5, more preferably from 1 to 4.

Examples of the first (meth)acrylic acid alkyl ester include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, n-pentyl (meth)acrylate, isopentyl (meth)acrylate, n-hexyl (meth)acrylate, isohexyl (meth)acrylate, n-heptyl (meth)acrylate, and isoheptyl (meth)acrylate. The first (meth)acrylic acid alkyl ester preferably contains at least one selected from the group consisting of: n-butyl acrylate; and isobutyl acrylate, and more preferably contains n-butyl acrylate.

The content ratio of the constituent unit U1 derived from the first (meth)acrylic acid alkyl ester in the (meth)acrylic polymer is, for example, 20 wt% or more, and may be 30 wt% or more, 40 wt% or more, or 50 wt% or more. The upper limit of the content ratio of the constituent unit U1 is, for example, 95 wt% or less, and may be 90 wt% or less, 80 wt% or less, 70 wt% or less, or 60 wt% or less.

The second (meth)acrylic acid alkyl ester has an alkyl group having 8 to 12 carbon atoms as described above. The number of carbon atoms of the alkyl group in the second (meth)acrylic acid alkyl ester is preferably 9 or more. The number of carbon atoms of the alkyl group may be 11 or less, or may be 10 or less. The number of carbon atoms of the alkyl group is preferably from 9 to 12.

Examples of the second (meth)acrylic acid alkyl ester include n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-undecyl (meth)acrylate, and n-dodecyl (meth)acrylate. The second (meth)acrylic acid alkyl ester preferably contains at least one selected from the group consisting of: 2-ethylhexyl acrylate; n-octyl acrylate; isononyl acrylate; isodecyl acrylate; and n-dodecyl acrylate, and more preferably contains isononyl acrylate.

The content ratio of the constituent unit U2 derived from the second (meth)acrylic acid alkyl ester in the (meth)acrylic polymer is, for example, 80 wt% or less, and may be 70 wt% or less, 60 wt% or less, or 50 wt% or less. The lower limit of the content ratio of the constituent unit U2 is, for example, 5 wt% or more, and may be 10 wt% or more, 20 wt% or more, 30 wt% or more, or 40 wt% or more.

The (meth)acrylic polymer may contain a constituent unit derived from a third (meth)acrylic acid alkyl ester having an alkyl group having 13 or more carbon atoms, but is preferably free of this constituent unit.

The content ratio of the constituent units derived from the (meth)acrylic acid alkyl esters in the (meth)acrylic polymer is, for example, 50 wt% or more, and may be 60 wt% or more, 70 wt% or more, 80 wt% or more, 90 wt% or more, or 95 wt% or more. The upper limit of the content ratio is not particularly limited and is, for example, 99 wt% or less.

In the (meth)acrylic polymer, the constituent unit U3 derived from the carboxyl group-containing monomer may contribute to the stabilization of the particles of the (meth)acrylic polymer in the pressure-sensitive adhesive composition. The carboxyl group-containing monomer is a compound containing a carboxyl group in a structure thereof and containing a polymerizable unsaturated double bond, such as a (meth)acryloyl group or a vinyl group. Examples of the carboxyl group-containing monomer include (meth)acrylic acid, carboxyethyl (meth)acrylate, carboxypentyl (meth)acrylate, (meth)acryloyloxyethyl succinic acid, itaconic acid, maleic acid, fumaric acid, and crotonic acid. The carboxyl group-containing monomer preferably contains acrylic acid.

The content ratio of the constituent unit U3 derived from the carboxyl group-containing monomer in the (meth)acrylic polymer is, for example, 0.1 wt% or more, and may be 1 wt% or more, 2 wt% or more, or 3 wt% or more. The upper limit of the content ratio of the constituent unit U3 is, for example, 25 wt% or less, and may be 20 wt% or less, 10 wt% or less, 7 wt% or less, or 4 wt% or less. The content ratio of the constituent unit U3 is preferably from 1 wt% to 7 wt%, more preferably from 2 wt% to 4 wt%.

It is preferred that the (meth)acrylic polymer further contain a constituent unit U4 derived from a silane-based monomer. The silane-based monomer is a radically polymerizable compound having a silicon atom and is preferably a silane compound having a (meth)acryloyl group. It is more preferred that the silane-based monomer have an alkoxysilyl group. Examples of the silane-based monomer include 3-(meth)acryloyloxypropyltrimethoxysilane, 3-(meth)acryloyloxypropyltriethoxysilane, 3-(meth)acryloyloxypropylmethyldimethoxysilane, 3-(meth)acryloyloxypropylmethyldiethoxysilane, 10-(meth)acryloyloxydecyltrimethoxysilane, 10-(meth)acryloyloxydecyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, and 8-vinyloctyltriethoxysilane.

The silane-based monomer undergoes hydrolysis during emulsification and/or emulsion polymerization in the presence of water to form a silanol group (-SiOH), for example. That is, when the (meth)acrylic polymer is synthesized by using the silane-based monomer in the presence of water, the constituent unit U4 derived from the silane-based monomer has, for example, a silanol group. In this case, when a pressure-sensitive adhesive layer is produced from the pressure-sensitive adhesive composition, particles of the (meth)acrylic polymer are crosslinked (silanol crosslinking) through a condensation reaction between silanol groups. According to this method, a structure in which a plurality of particles of the (meth)acrylic polymer are crosslinked is formed in the pressure-sensitive adhesive layer.

The content ratio of the constituent unit U4 derived from the silane-based monomer in the (meth)acrylic polymer is, for example, 0.01 wt% or more. The upper limit of the content ratio is, for example, 10 wt% or less, and may be 1 wt% or less, 0.1 wt% or less, or 0.05 wt% or less.

The (meth)acrylic polymer may further contain or may not contain a constituent unit derived from another monomer copolymerizable with the (meth)acrylic acid alkyl ester. Examples of the other monomer may include: a sulfoxyl group-containing monomer, such as styrenesulfonic acid, allylsulfonic acid, sulfopropyl (meth)acrylate, (meth)acryloyloxynaphthalenesulfonic acid, or acrylamidomethylpropanesulfonic acid; a hydroxyl group-containing monomer, such as (meth)acrylic acid hydroxyethyl ester or (meth)acrylic acid hydroxypropyl ester; an amide group-containing monomer, such as (meth)acrylamide, dimethyl (meth)acrylamide, N-butyl acrylamide, N-methylol (meth)acrylamide, or N-methylolpropane (meth)acrylamide; a (meth)acrylic acid alkylaminoalkyl ester, such as (meth)acrylic acid aminoethyl ester, (meth)acrylic acid dimethylaminoethyl ester, or (meth)acrylic acid tert-butylaminoethyl ester; a (meth)acrylic acid alkoxyalkyl ester, such as (meth)acrylic acid methoxyethyl ester or (meth)acrylic acid ethoxyethyl ester; a (meth)acrylic acid ester containing an alkoxy group (or an ether bond in a side chain), such as (meth)acrylic acid methoxyethylene glycol ester, (meth)acrylic acid tetrahydrofurfuryl ester, (meth)acrylic acid methoxyethylene glycol ester, (meth)acrylic acid methoxydiethylene glycol ester, (meth)acrylic acid methoxypolyethylene glycol ester, or (meth)acrylic acid methoxypolypropylene glycol ester; and a vinyl-based monomer, such as (meth)acrylonitrile, vinyl acetate, vinyl propionate, N-vinyl-2-pyrrolidone, methylvinylpyrrolidone, vinylpyridine, vinylpiperidine, vinylpyrimidine, vinylpiperazine, vinylpyrazine, vinylpyrrole, vinylimidazole, vinylcaprolactam, vinyloxazole, or vinylmorpholine. The number of kinds of the other monomer may be only one, or two or more.

The content ratio of the constituent unit derived from the other monomer in the (meth)acrylic polymer is, for example, more than 0 wt%, and may be from 0.1 wt% to 50 wt%, from 1 wt% to 30 wt%, from 2 wt% to 20 wt%, or from 3 wt% to 10 wt%.

The glass transition temperature (Tg) of the (meth)acrylic polymer is, for example, from -10°C to 30°C, and may be from -5°C to 20°C, from 0°C to 15°C, or from 5°C to 10°C, in terms of calculated theoretical value determined by the Fox equation.

The weight average molecular weight of the (meth)acrylic polymer is, for example, from 1000 to 10000000, and may be from 5000 to 5000000, from 10000 to 1000000, or from 50000 to 800000. The weight average molecular weight of the (meth)acrylic polymer may be controlled by the amounts of a polymerization initiator, a chain transfer agent, an emulsifier, and the like used during polymerization, reaction conditions, and the like.

The (meth)acrylic polymer may be synthesized through emulsion polymerization using an emulsion of a group of monomers serving as a raw material, for example. In the emulsion polymerization, an emulsifier (surfactant) and a polymerization initiator, and a chain transfer agent and the like as required may be appropriately used. A method for the emulsion polymerization is, for example, a batch loading method (batch polymerization method), a monomer dropping method, or a monomer emulsion dropping method. In the monomer dropping method, a continuous dropping method or a division dropping method may be selected as appropriate. Those methods may be combined as appropriate. Reaction conditions for the emulsion polymerization may be adjusted as appropriate in accordance with the group of monomers, and a polymerization temperature is from 20°C to 100°C, and a polymerization time is from 30 minutes to 24 hours, as an example.

In the emulsion polymerization, an anionic emulsifier, a nonionic emulsifier, or the like is preferably used as the emulsifier. As an example, the anionic emulsifier or the nonionic emulsifier in the pressure-sensitive adhesive composition according to the at least one embodiment corresponds to the emulsifier used during the emulsion polymerization. Details of the emulsifier are described later.

Examples of the polymerization initiator include: azo-based initiators, such as 2,2'-azobisisobutyronitrile, 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), and 2,2'-azobis[N-(2-carboxyethyl)-2-methylpropionamidine] hydrate; persulfate salts, such as potassium persulfate and ammonium persulfate; peroxide-based initiators, such as benzoyl peroxide, tert-butyl hydroperoxide, and hydrogen peroxide; substituted ethane-based initiators such as phenyl-substituted ethane; aromatic carbonyl compounds; and redox initiators, such as a combination of a persulfate salt and sodium hydrogen sulfite, and a combination of a peroxide and sodium ascorbate. Of those, azo-based initiators are preferred. The usage amount of the polymerization initiator is, for example, from 0.005 part by weight to 1 part by weight with respect to 100 parts by weight of the (meth)acrylic polymer (or the group of monomers for synthesizing the (meth)acrylic polymer).

Examples of the chain transfer agent include mercaptans such as dodecanethiol. The usage amount of the chain transfer agent is, for example, from 0.001 part by weight to 0.5 part by weight, and may be from 0.01 part by weight to 0.4 part by weight, or from 0.01 part by weight to 0.04 part by weight, with respect to 100 parts by weight of the (meth)acrylic polymer (or the group of monomers for synthesizing the (meth)acrylic polymer).

The dispersion medium used in the emulsion polymerization preferably contains water. The dispersion medium may contain an organic solvent together with water. The usage amount of the dispersion medium is, for example, from 30 parts by weight to 80 parts by weight, and may be from 40 parts by weight to 70 parts by weight, with respect to 100 parts by weight of the (meth)acrylic polymer (or the group of monomers for synthesizing the (meth)acrylic polymer).

The (meth)acrylic polymer may also be synthesized by a method except the emulsion polymerization. In this case, the pressure-sensitive adhesive composition may be prepared by dispersing the synthesized (meth)acrylic polymer in the dispersion medium with the emulsifier (an anionic emulsifier or a nonionic emulsifier).

The content ratio of the (meth)acrylic polymer in the pressure-sensitive adhesive composition is not particularly limited and is, for example, from 10 wt% to 90 wt%.

In the pressure-sensitive adhesive composition, the average particle diameter of the particles of the (meth)acrylic polymer is, for example, 1000 nm or less, and may be 700 nm or less, 500 nm or less, 400 nm or less, 300 nm or less, or 200 nm or less. When the average particle diameter of the particles of the (meth)acrylic polymer is 300 nm or less, compatibility between the (meth)acrylic polymer and the organic liquid component tends to be good. The lower limit of the average particle diameter of the particles of the (meth)acrylic polymer is not particularly limited, is, for example, 50 nm or more, and may be 100 nm or more. The term "average particle diameter" as used herein means an average particle diameter (volume average particle diameter) on a volume basis measured by a dynamic light scattering method. The average particle diameter of the particles of the (meth)acrylic polymer may be adjusted by reaction conditions and the like during the synthesis of the (meth)acrylic polymer.

### [Anionic Emulsifier and Nonionic Emulsifier]

The anionic emulsifier and the nonionic emulsifier are each, for example, a component that emulsifies the (meth)acrylic polymer in the pressure-sensitive adhesive composition. The nonionic emulsifier also tends to function as a component that adjusts the hardness of a surface of the pressure-sensitive adhesive layer. As described above, the anionic emulsifier or the nonionic emulsifier may be the emulsifier used during the emulsion polymerization for synthesizing the (meth)acrylic polymer. Those emulsifiers may each be added after the synthesis of the (meth)acrylic polymer.

At least one selected from the group consisting of: the anionic emulsifier; and the nonionic emulsifier may have a polymerizable group. Examples of the polymerizable group in the emulsifier include groups each containing a polymerizable unsaturated double bond, such as a (meth)acryloyl group and a vinyl group. The emulsifier containing a polymerizable group can function as a monomer during the emulsion polymerization for synthesizing the (meth)acrylic polymer. As an example, the emulsifier functioning as a monomer is copolymerized with the (meth)acrylic acid alkyl ester or the like and incorporated into the (meth)acrylic polymer during the emulsion polymerization. In this manner, in the pressure-sensitive adhesive composition according to the at least one embodiment, at least one of the anionic emulsifier or the nonionic emulsifier may be incorporated into the (meth)acrylic polymer. In other words, in the pressure-sensitive adhesive composition according to the at least one embodiment, the (meth)acrylic polymer may further contain a constituent unit derived from at least one of the anionic emulsifier or the nonionic emulsifier. Herein, the emulsifier incorporated into the (meth)acrylic polymer is also regarded as a component of the pressure-sensitive adhesive composition.

At least one selected from the group consisting of: the anionic emulsifier; and the nonionic emulsifier may have an oxyethylene group. In this case, the average number of moles of the oxyethylene group added in the emulsifier is, for example, 5 or more, and may be 10 or more. The upper limit and lower limit of the average number of moles of the oxyethylene group added are not particularly limited, but the average number of moles of the oxyethylene group added is preferably 20 or more and 50 or less.

Examples of the anionic emulsifier include sulfate ester salts and sulfonate ester salts. Examples of the sulfate ester salts include alkyl sulfate ester salts, such as sodium lauryl sulfate, ammonium lauryl sulfate, a sodium polyoxyethylene alkyl ether sulfate, an ammonium polyoxyethylene alkyl ether sulfate, an ammonium polyoxyethylene alkyl phenyl ether sulfate, and a sodium polyoxyethylene alkyl phenyl ether sulfate. An example of the sulfonate ester salts is sodium dodecylbenzenesulfonate. The above-mentioned compounds may each have any substituent. As an example, the ammonium polyoxyethylene alkyl ether sulfate may have an allyloxymethyl group and may be an ammonium polyoxyethylene-1-(allyloxymethyl) alkyl ether sulfate. The anionic emulsifier preferably contains an alkyl sulfate ester salt.

Examples of the nonionic emulsifier include a polyoxyethylene alkyl ether and a polyoxyethylene alkyl phenyl ether. The above-mentioned compounds may each have any substituent. As an example, the polyoxyethylene alkyl ether may have an allyloxymethyl group and may be a polyoxyethylene-1-(allyloxymethyl) alkyl ether. It is particularly preferred that the nonionic emulsifier contain a polyoxyethylene-1-(allyloxymethyl) alkyl ether.

The blending amount of the anionic emulsifier is, for example, 0.1 part by weight or more, and may be 0.3 part by weight or more, 0.5 part by weight or more, 0.8 part by weight or more, or 1 part by weight or more, with respect to 100 parts by weight of the (meth)acrylic polymer (or the group of monomers for synthesizing the (meth)acrylic polymer). The upper limit of the blending amount of the anionic emulsifier is, for example, 10 parts by weight or less, and may be 5 parts by weight or less, or 3 parts by weight or less, with respect to 100 parts by weight of the (meth)acrylic polymer. The pressure-sensitive adhesive composition may not include the anionic emulsifier.

The blending amount of the nonionic emulsifier is, for example, 0.1 part by weight or more, and may be 0.3 part by weight or more, 0.5 part by weight or more, 0.8 part by weight or more, 1 part by weight or more, 2 parts by weight or more, or 3 parts by weight or more, with respect to 100 parts by weight of the (meth)acrylic polymer (or the group of monomers for synthesizing the (meth)acrylic polymer). The upper limit of the blending amount of the nonionic emulsifier is, for example, 10 parts by weight or less, and may be 5 parts by weight or less, with respect to 100 parts by weight of the (meth)acrylic polymer.

### [Organic Liquid Component]

As described above, the pressure-sensitive adhesive composition according to the at least one embodiment includes the organic liquid component. According to the organic liquid component, there are tendencies that the modulus in a low-deformation region of the pressure-sensitive adhesive layer is decreased, good adhesiveness to skin is maintained, and damage to the stratum corneum can be reduced when the layer is peeled off, and pain can also be reduced when the layer is peeled off. In particular, when the organic liquid component is combined with the (meth)acrylic polymer and the nonionic emulsifier, the amount of the stratum corneum exfoliated when the pressure-sensitive adhesive layer is peeled off from skin tends to be greatly reduced. The organic liquid component is also suitable for improving the moisture permeability of the pressure-sensitive adhesive layer formed from the pressure-sensitive adhesive composition including the (meth)acrylic polymer.

The organic liquid component is a component that is liquid at room temperature (25°C) and is preferably compatible with the (meth)acrylic polymer. The term "compatible" means a state in which the organic liquid component is uniformly dissolved and incorporated into the (meth)acrylic polymer in the pressure-sensitive adhesive composition, and separation cannot be visually observed. It is preferred that the organic liquid component hardly migrate from the pressure-sensitive adhesive sheet including the pressure-sensitive adhesive layer to a medical tool or a medical device during use of the pressure-sensitive adhesive sheet.

As described above, the organic liquid component contains a carboxylic acid ester. The carboxylic acid ester is preferably free of any functional group (e.g., a thiol group) other than an ester group. A carboxylic acid for forming the carboxylic acid ester may be a monobasic acid or a polybasic acid. The carboxylic acid may be a saturated fatty acid or an unsaturated fatty acid. The carboxylic acid may be linear or branched. The number of carbon atoms of the carboxylic acid is not particularly limited, is, for example, from 1 to 18, and may be from 5 to 18, or from 8 to 18. Examples of the carboxylic acid include myristic acid, myristoleic acid, palmitic acid, isopalmitic acid, stearic acid, isostearic acid, lauric acid, caprylic acid, capric acid, lactic acid, phthalic acid, oleic acid, dimethyloctanoic acid, 2-ethylhexanoic acid, succinic acid, adipic acid, sebacic acid, trimellitic acid, linoleic acid, and linolenic acid.

An alcohol for forming the carboxylic acid ester may be a monohydric alcohol or a polyhydric alcohol. The valence of the polyhydric alcohol is, for example, from 2 to 4. The alcohol may be linear or branched. The number of carbon atoms of the alcohol is not particularly limited, and is, for example, from 1 to 18, and may be from 1 to 10, or from 1 to 5. Examples of the alcohol include ethanol, isopropanol, butanol, hexanol, octanol, myristyl alcohol, cetyl alcohol, isocetyl alcohol, stearyl alcohol, isostearyl alcohol, oleyl alcohol, hexyldecanol, octyldodecanol, ethylene glycol, propylene glycol, glycerin, trimethylolpropane, pentaerythritol, and sorbitan.

Specific examples of the carboxylic acid ester include ethyl myristate, isopropyl myristate, isocetyl myristate, octyldodecyl myristate, isopropyl palmitate, isostearyl palmitate, butyl stearate, isocetyl stearate, isopropyl isostearate, hexyl laurate, isostearyl laurate, cetyl lactate, myristyl lactate, diethyl phthalate, octyldodecyl oleate, hexyldecyl dimethyloctanoate, cetyl 2-ethylhexanoate, isocetyl 2-ethylhexanoate, stearyl 2-ethylhexanoate, dioctyl succinate, diisostearyl adipate, diisocetyl sebacate, trioleyl trimellitate, triisocetyl trimellitate, propylene glycol dicaprylate, propylene glycol dicaprate, propylene glycol diisostearate, glyceryl monocaprylate, glyceryl tricaprylate, glyceryl tri(2-ethylhexanoate), glyceryl tricaprate, glyceryl trilaurate, glyceryl triisostearate, glyceryl trioleate, trimethylolpropane tri(2-ethylhexanoate), and sorbitan trioleate. The organic liquid component preferably contains glyceryl tricaprylate as the carboxylic acid ester.

The blending amount of the organic liquid component is, for example, 10 parts by weight or more, and may be 20 parts by weight or more, 30 parts by weight or more, 40 parts by weight or more, 50 parts by weight or more, 60 parts by weight or more, or 70 parts by weight or more, with respect to 100 parts by weight of the (meth)acrylic polymer. As the blending amount of the organic liquid component increases, the moisture permeability of the pressure-sensitive adhesive layer tends to be improved. The upper limit of the blending amount of the organic liquid component is, for example, 120 parts by weight or less, and may be 100 parts by weight or less, or 80 parts by weight or less, with respect to 100 parts by weight of the (meth)acrylic polymer from the viewpoint of sufficiently ensuring the pressure-sensitive adhesive strength of the pressure-sensitive adhesive layer. The blending amount of the organic liquid component is preferably from 30 parts by weight to 80 parts by weight, more preferably from 40 parts by weight to 80 parts by weight, with respect to 100 parts by weight of the (meth)acrylic polymer.

### [Dispersion medium]

The pressure-sensitive adhesive composition may further include a dispersion medium. In particular, the pressure-sensitive adhesive composition preferably includes water as the dispersion medium. The pressure-sensitive adhesive composition is typically an oil-in-water (O/W) emulsion. According to the pressure-sensitive adhesive composition including water as the dispersion medium, the discharge amount of an organic solvent removed by heating during production of the pressure-sensitive adhesive layer can be significantly reduced. Consequently, it is possible not only to reduce fuel required to burn the organic solvent removed by heating in a deodorizing furnace or the like, but also to reduce CO₂ emissions caused by the burning of the organic solvent. The pressure-sensitive adhesive composition may include an organic solvent together with water as the dispersion medium. The content ratio of the dispersion medium in the pressure-sensitive adhesive composition is not particularly limited and is, for example, from 10 wt% to 90 wt%.

### [Additive]

The pressure-sensitive adhesive composition may further include an additive except those described above. Examples of the additive include a crosslinking agent, a tackifier, a thickener, a plasticizer, a softener, a filler, and a pigment.

### [Physical Properties of Pressure-sensitive Adhesive Composition]

The pressure-sensitive adhesive composition is preferably neutral. In the neutral pressure-sensitive adhesive composition, the particles of the (meth)acrylic polymer are less liable to aggregate, and stability tends to be high. The pH of the pressure-sensitive adhesive composition is, for example, from 6.0 to 8.0, and may be from 6.5 to 7.5. The pH of the pressure-sensitive adhesive composition is preferably 7.0.

The viscosity of the pressure-sensitive adhesive composition is, for example, 500 mPa·s or less, and may be 300 mPa·s or less, or 100 mPa·s or less, under the conditions of a pH of 7.0 and a temperature of 25°C. It can be said that the pressure-sensitive adhesive composition having a viscosity of 500 mPa·s or less has practically sufficient coatability. The lower limit of the viscosity of the pressure-sensitive adhesive composition is, for example, 10 mPa·s or more.

### <Embodiment of Pressure-sensitive Adhesive Sheet>

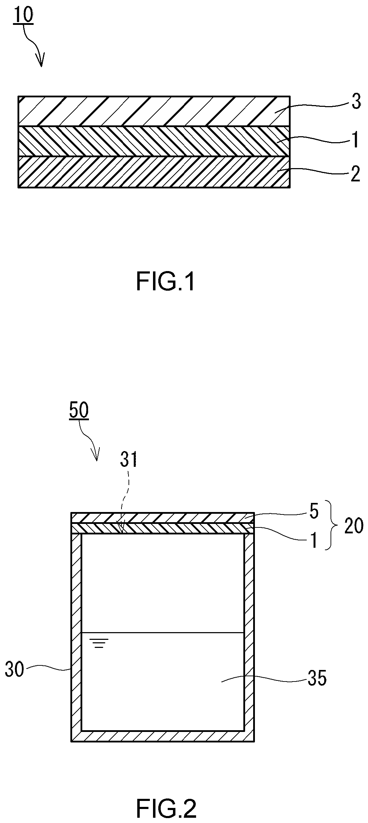

As illustrated in FIG. 1, a pressure-sensitive adhesive sheet 10 according to at least one embodiment of the present invention includes a pressure-sensitive adhesive layer 1. The pressure-sensitive adhesive layer 1 is formed from the above-mentioned pressure-sensitive adhesive composition, and is specifically a cured product of the pressure-sensitive adhesive composition. The term "pressure-sensitive adhesive sheet" as used herein is used as a term encompassing "pressure-sensitive adhesive tape."

The pressure-sensitive adhesive sheet 10 may further include a base material 2 that supports the pressure-sensitive adhesive layer 1, and a release liner 3 arranged on a surface of the pressure-sensitive adhesive layer 1. For example, the pressure-sensitive adhesive layer 1 is located between the base material 2 and the release liner 3, and is in direct contact with each of the base material 2 and the release liner 3. As an example, the pressure-sensitive adhesive sheet 10 may be used by peeling off the release liner 3 and then attaching the pressure-sensitive adhesive layer 1 to an object (e.g., skin). The pressure-sensitive adhesive sheet 10 is not limited to the above-mentioned structure. For example, the pressure-sensitive adhesive sheet 10 may be formed only of the pressure-sensitive adhesive layer 1. The pressure-sensitive adhesive sheet 10 may include two pressure-sensitive adhesive layers 1 and two release liners 3, and may have, for example, a structure in which the release liner 3, the pressure-sensitive adhesive layer 1, the base material 2, the pressure-sensitive adhesive layer 1, and the release liner 3 are laminated in this order.

### [Pressure-sensitive Adhesive Layer]

The thickness of the pressure-sensitive adhesive layer 1 is not particularly limited and is, for example, from 10 µm to 80 µm.

The gel fraction of the pressure-sensitive adhesive layer 1 is, for example, from 20% to 80%, and may be from 40% to 80%.

In the at least one embodiment, the moisture permeability P of the pressure-sensitive adhesive layer 1 determined by the following test is preferably 800 g/(m^{2.}24 h) or more.

Test: a laminate including the pressure-sensitive adhesive layer 1 having a thickness of 30 µm and a polyurethane film having a thickness of 30 µm is produced. The laminate is bonded to a glass vessel accommodating water so as to close the opening of the glass vessel. The glass vessel is allowed to stand for 24 hours under the conditions of a temperature of 40°C and a humidity of 30%RH, and the weight of water that has permeated the laminate from the inside of the glass vessel is determined. The ratio of the weight (g) to the opening area (m²) of the opening is specified as the moisture permeability P.

A detailed method for measuring the moisture permeability P of the pressure-sensitive adhesive layer 1 is described below with reference to FIG. 2. First, a pressure-sensitive adhesive layer 1 having a thickness of 25 µm and having the same composition as that of the pressure-sensitive adhesive layer 1 is formed on a release liner to produce a laminate of the release liner and the pressure-sensitive adhesive layer 1. The pressure-sensitive adhesive layer 1 may be produced by a method described later. The entire surface of the pressure-sensitive adhesive layer 1 of the obtained laminate is then superimposed on a polyurethane film 5 (thickness: 30 µm), and a 2 kg roller is reciprocated once to pressure-bond the laminate and the polyurethane film to each other. As the polyurethane film 5, a film that has sufficiently high moisture permeability as compared to the pressure-sensitive adhesive layer 1 and that hardly affects the value of the moisture permeability P is used. Next, the release liner is peeled off from the pressure-sensitive adhesive layer 1. Thus, a laminate 20 including the pressure-sensitive adhesive layer 1 and the polyurethane film 5 is produced. As required, the laminate 20 is cut to adjust the shape and size thereof. As an example, the shape and the size are adjusted as follows: the laminate 20 has a circular shape in plan view and its diameter is 50 mm.

Next, a glass vessel 30 accommodating water (distilled water) 35 is prepared. The glass vessel 30 has an opening 31 and has, for example, a bottomed cylindrical shape having an inner diameter of 40 mm and a height of 40 mm. The volume of the water 35 accommodated in the glass vessel 30 is, for example, 10 mL. Next, the laminate 20 is bonded to the glass vessel 30 so as to close the opening 31 of the glass vessel 30 (FIG. 2). Specifically, the pressure-sensitive adhesive layer 1 of the laminate 20 is bonded to an end surface of the glass vessel 30 to seal the internal space of the glass vessel 30. Thus, a measurement object 50 is obtained.

Next, the glass vessel 30 (specifically, the measurement object 50) is set in a commercially available thermo-hygrostat, and left to stand for 24 hours under the conditions of a temperature of 40°C and a humidity of 30%RH. At this time, part of the water 35 is vaporized, permeates the laminate 20, and is discharged to the outside from the inside of the glass vessel 30. A value (W1-W2) obtained by subtracting the weight W2 (g) of the measurement object 50 after being left to stand for 24 hours from the weight W1 (g) of the measurement object 50 immediately after production is specified as the weight W (g) of water (specifically, water vapor) that has permeated the laminate 20 from the inside of the glass vessel 30. The ratio W/A of the weight W(g) of water having permeated the laminate 20 to the opening area A (m²) of the opening 31 of the glass vessel 30 may be specified as the moisture permeability P. The opening area A (m²) of the opening 31 may be calculated by, for example, the formula (r/2)²×π based on the inner diameter "r" (m) of the glass vessel 30.

The moisture permeability P of the pressure-sensitive adhesive layer 1 is preferably 900 g/(m^{2.}24 h) or more, and may be 930 g/(m^{2.}24 h) or more, 950 g/(m^{2.}24 h) or more, 980 g/(m^{2.}24 h) or more, 1000 g/(m^{2.}24 h) or more, 1100 g/(m^{2.}24 h) or more, 1200 g/(m^{2.}24 h) or more, 1300 g/(m^{2.}24 h) or more, or 1400 g/(m^{2.}24 h) or more. The upper limit of the moisture permeability P is not particularly limited, is, for example, 5000 g/(m^{2.}24 h) or less, and may be 3000 g/(m^{2.}24 h) or less.

### [Base Material]

The base material 2 is, for example, a layered member that supports the pressure-sensitive adhesive layer 1. The base material 2 may be a single layer or a laminate including a plurality of layers. From the viewpoint of suppressing skin stuffiness when the pressure-sensitive adhesive sheet 10 is attached to skin, the base material 2 preferably has sufficiently high moisture permeability as compared to the pressure-sensitive adhesive layer 1.

The base material 2 may be non-porous or porous. In the case where the base material 2 is porous, even when the base material 2 is thick, the moisture permeability tends to be less liable to decrease. It is preferred that the porous base material 2 have water vapor permeability that allows water vapor to permeate the material, and such water impermeability as not to substantially allow liquid water to permeate the material.

Examples of materials of the base material 2 include urethane-based polymers, such as polyether urethane and polyester urethane; amide-based polymers such as polyether polyam ide block polymer; acrylic polymers such as polyacrylate; polyolefin-based polymers, such as polyethylene, polypropylene, and an ethylene/vinyl acetate copolymer; and polyester-based polymers such as polyether polyester. From the viewpoint of moisture permeability, the base material 2 preferably contains a urethane-based polymer or an amide-based polymer, and particularly preferably contains a urethane-based polymer. As an example, the base material 2 may be a polyurethane film including a urethane-based polymer, or may be a laminate in which a layer containing a polyolefin-based polymer is stacked on a polyurethane film.

The thickness of the base material 2 is not particularly limited, is, for example, from 10 µm to 100 µm, and may be from 20 µm to 40 µm.

From the viewpoint of followability when the pressure-sensitive adhesive sheet 10 is attached to skin, the base material 2 preferably has, for example, a tensile strength of from 100 kg/cm² to 900 kg/cm² and a 100% modulus of from 10 kg/cm² to 100 kg/cm².

### [Release Liner]

As the release liner 3, a known release liner may be appropriately used. The release liner 3 includes, for example, a liner base material and a release layer formed on one surface of the liner base material. Examples of materials of the liner base material include those described above for the base material 2. The release layer may be formed by applying a release treatment agent to a surface of the liner base material. Examples of the release treatment agent include a silicone-based release treatment agent, a long chain alkyl-based release treatment agent, a fluorine-based release treatment agent, and a molybdenum sulfide-based release treatment agent.

The thickness of the release liner 3 is not particularly limited, is, for example, from 5 µm to 100 µm, and may be from 10 µm to 50 µm.

### [Pressure-sensitive Adhesive Sheet Production Method]

The pressure-sensitive adhesive sheet 10 according to the at least one embodiment may be produced by the following method, for example. The above-mentioned pressure-sensitive adhesive composition is first applied onto the release liner 3 to form a coating film. The method of applying the pressure-sensitive adhesive composition is not particularly limited, and a spin coating method, a dip coating method, or like may be used, for example. The pressure-sensitive adhesive composition may also be applied with a wire bar or the like.

Next, the pressure-sensitive adhesive layer 1 is formed by drying the coating film. The coating film may be dried under a heating condition, for example. The temperature at which the coating film is heated is, for example, 50°C or more, and may be 100°C or more. The heating time for the coating film is, for example, 1 minute or more.

Next, the base material 2 is bonded to the pressure-sensitive adhesive layer 1. Thus, the pressure-sensitive adhesive sheet 10 can be produced.

### [Characteristics of Pressure-sensitive Adhesive Sheet]

The pressure-sensitive adhesive sheet 10 according to the at least one embodiment tends to be capable of being attached to the object (in particular, skin) with a sufficient strength via the pressure-sensitive adhesive layer 1. As an example, the pressure-sensitive adhesive sheet 10 preferably has a pressure-sensitive adhesive strength F of 0.1 N/10 mm or more with respect to a bakelite board.

The above-mentioned pressure-sensitive adhesive strength F may be measured by the following method. The pressure-sensitive adhesive sheet 10 to be evaluated is first cut into a test piece of 100 mm in length by 10 mm in width. Next, the release liner 3 is removed from the test piece to expose a surface of the pressure-sensitive adhesive layer 1. The entire surface of the pressure-sensitive adhesive layer 1 is superimposed on a bakelite board, and a 2 kg roller is reciprocated once to pressure-bond the test piece and the bakelite board to each other. Next, the test piece is peeled off from the bakelite board at a peel rate of 300 mm/min and a peel angle of 180° with a commercially available tensile tester. The force required to peel off the test piece from the bakelite board at this time is measured at intervals of 0.5 s per measurement at a position where numerical values are relatively stable. The average of the obtained measurement values is determined as the pressure-sensitive adhesive strength F. The above-mentioned test is conducted in an atmosphere at 23°C.

The pressure-sensitive adhesive strength F is preferably 0.3 N/10 mm or more, and may be 0.5 N/10 mm or more. The upper limit of the pressure-sensitive adhesive strength F is, for example, 5.0 N/10 mm or less, and may be 4.0 N/10 mm or less, 3.0 N/10 mm or less, 2.0 N/10 mm or less, or 1.0 N/10 mm or less.

### [Application of Pressure-sensitive Adhesive Sheet]

The pressure-sensitive adhesive sheet 10 according to the at least one embodiment is typically used for medical purposes. Specifically, the pressure-sensitive adhesive sheet 10 can be used for pressure-sensitive adhesive bandages, surgical tapes, first-aid plasters, large plasters, dressing materials, poultices, drapes, and the like. By allowing the pressure-sensitive adhesive layer 1 to carry a drug, the pressure-sensitive adhesive sheet 10 can also be used as a transdermally absorbable drug. The pressure-sensitive adhesive sheet 10 may also be used for non-medical purposes.

### EXAMPLES

The present invention is described in more detail below by way of Examples and Comparative Examples, but the present invention is not limited thereto.

### (Example 1)

47 Parts by weight of isononyl acrylate (iNA), 50 parts by weight of butyl acrylate (BA), 3 parts by weight of acrylic acid (AA), and 0.03 part by weight of 3-(methacryloyloxy)propyltrimethoxysilane (KBM-503, manufactured by Shin-Etsu Silicone) serving as monomer components, 0.02 part by weight of 1-dodecanethiol (1-LSH) serving as a chain transfer agent, 0.96 part by weight of an ammonium polyoxyethylene-1-(allyloxymethyl) alkyl ether sulfate (AQUALON KH-10, manufactured by DKS Co. Ltd.) serving as an anionic emulsifier, 3.84 parts by weight of a polyoxyethylene-1-(allyloxymethyl) alkyl ether (AQUALON KN-30, manufactured by DKS Co. Ltd.) serving as a nonionic emulsifier, and 52.68 parts by weight of water were loaded into a vessel, and stirred with a homomixer to emulsify the monomer components. Thus, a monomer emulsion was obtained.

3.62 Parts by weight of the above-mentioned monomer emulsion, 0.04 part by weight of an ammonium polyoxyethylene-1-(allyloxymethyl) alkyl ether sulfate, 0.16 part by weight of a polyoxyethylene-1-(allyloxymethyl) alkyl ether, and 50.47 parts by weight of water were loaded into a reaction vessel (separable flask) including a cooling tube, a nitrogen inlet tube, a temperature gauge, and a stirrer, and stirred for 1 hour while an inert gas was introduced. Next, 0.1 part by weight of 2,2'-azobis[N-(2-carboxyethyl)-2-methylpropionamidine] hydrate serving as a polymerization initiator was loaded, and the materials were subjected to a reaction at 60°C for 40 minutes. Further, 177.81 parts by weight of the above-mentioned monomer emulsion was added dropwise over 3 hours, followed by aging for 3 hours. Thus, a dispersion liquid containing a (meth)acrylic polymer was obtained.

Next, the dispersion liquid was neutralized by adding 4.73 parts by weight of 10% aqueous ammonia to the dispersion liquid, and the pH thereof was adjusted to about 7. Further, 0.6 part by weight of a thickener (Aron B-500, manufactured by TOAGOSEI CO., LTD.) and 60 parts by weight of glyceryl tricaprylate (COCONAD RK, manufactured by Kao Corporation) serving as an organic liquid component were added to the dispersion liquid to provide a pressure-sensitive adhesive composition of Example 1.

### (Examples 2 to 14 and Comparative Examples 1 to 5)

Pressure-sensitive adhesive compositions of Examples 2 to 14 and Comparative Examples 1 to 5 were obtained in the same manner as in Example 1 except that the kinds and amounts of the materials used were changed as shown in Tables 1 and 2. No organic liquid component was added in each of Comparative Examples 1 and 2. In each of Comparative Examples 3 to 5, no nonionic emulsifier was added. In each of Tables 1 and 2, the usage amount of each emulsifier is the total value of an amount used to produce a monomer emulsion and an amount separately added to the monomer emulsion.

### [Evaluation]

The pressure-sensitive adhesive composition of each of Examples and Comparative Examples was applied to a release liner (PET-50-SCA1, manufactured by Fujico Co., Ltd.) to produce a coating film. Next, the coating film was dried at 130°C for 3 minutes to form a pressure-sensitive adhesive layer (thickness: 30 µm). The pressure-sensitive adhesive layer was bonded to a base material to provide a pressure-sensitive adhesive sheet for evaluation. A polyurethane film (thickness: 30 µm) (ESMER URS210, manufactured by Nihon Matai Co., Ltd.) was used as the base material.

### (Appearance Change)

A pressure-sensitive adhesive sheet for evaluation having a size of 10 mm by 50 mm was prepared, and the release liner thereof was peeled off from the pressure-sensitive adhesive sheet for evaluation. The exposed pressure-sensitive adhesive layer was superimposed on a forearm portion of a subject and pressure-bonded with a 2 kg roller. In this state, the pressure-sensitive adhesive sheet for evaluation was left to stand in an environment at a temperature of 23°C and a humidity of 50%RH for 6 hours. The change in appearance of the pressure-sensitive adhesive sheet for evaluation after being left to stand was evaluated according to the following criteria.

### ·Evaluation Criteria

Good (∘): No peeling can be visually observed.
Poor (×): There is peeling at an edge.

### (Amount of Stratum Corneum Exfoliated)

A pressure-sensitive adhesive sheet for evaluation having a size of 10 mm by 50 mm was prepared, and the release liner thereof was peeled off from the pressure-sensitive adhesive sheet for evaluation. The exposed pressure-sensitive adhesive layer was superimposed on a forearm portion of a subject and pressure-bonded with a 2 kg roller. In this state, the pressure-sensitive adhesive sheet for evaluation was left to stand in an environment at a temperature of 23°C and a humidity of 50%RH for 6 hours, and the pressure-sensitive adhesive sheet for evaluation was then peeled off from the forearm portion. The pressure-sensitive adhesive sheet for evaluation was peeled off with a peeling tester (AGX-V, manufactured by SHIMADZU CORPORATION) under the condition of a peel rate of 300 mm/min.

Next, the surface of the pressure-sensitive adhesive layer of the peeled pressure-sensitive adhesive sheet for evaluation was stained with a stratum corneum stain solution (Gential Violet 1%, Brilliant Green 0.5% aqueous solution) for 10 minutes, and then washed with water. The stained surface of the pressure-sensitive adhesive layer was observed with an optical microscope (VX-7000, manufactured by KEYENCE CORPORATION). The region in which the stratum corneum adhered in a microscope image was specified, and the total value of areas of the respective regions was calculated through image processing. The ratio of the total value to the area of the surface of the pressure-sensitive adhesive layer in the microscope image was regarded as the amount of the stratum corneum exfoliated, and evaluated by the following criteria.

### Evaluation Criteria

Excellent (⊚): The amount of the stratum corneum exfoliated is less than 10%.
Good (∘): The amount of the stratum corneum exfoliated is 10% or more and less than 20%.
Fair (Δ): The amount of the stratum corneum exfoliated is 20% or more and less than 30%.
Poor (×): The amount of the stratum corneum exfoliated is 30% or more.

### (Moisture Permeability)

The moisture permeability P of the pressure-sensitive adhesive layer was measured by the above-mentioned method using the pressure-sensitive adhesive sheet for evaluation, and evaluated by the following criteria.

### ·Evaluation Criteria

Excellent (⊚): The moisture permeability P is 1200 g/(m^{2.}24 h) or more.
Good (∘): The moisture permeability P is 1000 g/(m^{2.}24 h) or more and less than 1200 g/(m^{2.}24 h).
Fair (Δ): The moisture permeability P is 800 g/(m^{2.}24 h) or more and less than 1000 g/(m^{2.}24 h).
Poor (×): The moisture permeability P is less than 800 g/(m^{2.}24 h).

**Table 1-1**

| | | | Example 1 | Example 2 | Example 3 | Example 4 | Example 5 |
|---|---|---|---|---|---|---|---|
| Monomer component (part(s) by weight) | Second (meth)acrylic acid alkyl ester | 2EHA (C8) | | | | | |
| | | iNA (C9) | 47 | 47 | 47 | 47 | 47 |
| | | iDAA (C10) | | | | | |
| | | LA (C12) | | | | | |
| | First (meth)acrylic acid alkyl ester | BA (C4) | 50 | 50 | 50 | 50 | 50 |
| | | iBA (C4) | | | | | |
| | Carboxyl group-containing monomer | AA | 3 | 3 | 3 | 3 | 3 |
| | Silane-based monomer | KBM-503 | 0.03 | 0.03 | 0.03 | 0.03 | 0.03 |
| Additive (part(s) by weight) | Chain transfer agent | 1-LSH | 0.02 | 0.02 | 0.02 | 0.02 | 0.02 |
| | Anionic emulsifier | KH-10 | 1 | 1 | | 1 | 1 |
| | | SR-10 | | | 1 | | |
| | Nonionic emulsifier | KN-30 | 4 | | | 4 | 4 |
| | | ER-30 | | 4 | 4 | | |
| | Organic liquid component | COCONAD RK | 60 | 60 | 60 | 30 | 40 |
| Evaluation results | Appearance change | | ○ | ○ | ○ | ○ | ○ |
| | Amount of stratum corneum exfoliated | | ⊚ | ○ | ○ | ○ | ○ |
| | Moisture permeability P | | ⊚ | ⊚ | ⊚ | Δ | ○ |

**Table 1-2**

| | | | Example 6 | Example 7 | Example 8 | Example 9 | Example 10 |
|---|---|---|---|---|---|---|---|
| Monomer component (part(s) by weight) | Second (meth)acrylic acid alkyl ester | 2EHA (C8) | | | | | |
| | | iNA (C9) | 47 | 47 | | | 47 |
| | | iDAA (C10) | | | 47 | | |
| | | LA (C12) | | | | 47 | |
| | First (meth)acrylic acid alkyl ester | BA (C4) | 50 | 50 | 50 | 50 | |
| | | iBA (C4) | | | | | 50 |
| | Carboxyl group-containing monomer | AA | 3 | 3 | 3 | 3 | 3 |
| | Silane-based monomer | KBM-503 | 0.03 | 0.03 | 0.03 | 0.03 | 0.03 |
| Additive (part(s) by weight) | Chain transfer agent | 1-LSH | 0.02 | 0.02 | 0.02 | 0.02 | 0.02 |
| | Anionic emulsifier | KH-10 | 1 | 1 | 1 | 1 | 1 |
| | | SR-10 | | | | | |
| | Nonionic emulsifier | KN-30 | 4 | 4 | 4 | 4 | 4 |
| | | ER-30 | | | | | |
| | Organic liquid component | COCONAD RK | 50 | 70 | 60 | 60 | 60 |
| Evaluation results | Appearance change | | ○ | ○ | ○ | ○ | ○ |
| | Amount of stratum corneum exfoliated | | ⊚ | ⊚ | ○ | ○ | ○ |
| | Moisture permeability P | | ○ | ⊚ | ○ | ○ | ○ |

**Table 2-1**

| | | | Example 11 | Example 12 | Example 13 | Example 14 |
|---|---|---|---|---|---|---|
| | Second (meth)acrylic acid alkyl ester | 2EHA (C8) | | | 47 | |
| | | nOcA (C8) | | 47 | | |
| | | iNA (C9) | 47 | | | 47 |
| Monomer component (part(s) by weight) | | iDAA (C10) | | | | |
| | | LA (C12) | | | | |
| | First (meth)acrylic acid alkyl ester | BA (C4) | 50 | 50 | 50 | 50 |
| | | iBA (C4) | | | | |
| | | MMA (C1) | | | | |
| | Carboxyl group-containing monomer | AA | 3 | 3 | 3 | 3 |
| | Silane-based monomer | KBM-503 | 0.03 | 0.03 | 0.03 | 0.03 |
| Additive (part(s) by weight) | Chain transfer agent | 1-LSH | 0.02 | 0.02 | 0.02 | 0.02 |
| | Anionic emulsifier | KH-10 | 1 | 1 | 1 | |
| | | SR-10 | | | | |
| | Nonionic emulsifier | KN-30 | 2 | 4 | 4 | 3 |
| | | ER-30 | | | | |
| | Organic liquid component | COCONAD RK | 60 | 60 | 60 | 60 |
| Evaluation results | Appearance change | | ○ | ○ | ○ | ○ |
| | Amount of stratum corneum exfoliated | | ⊚ | ⊚ | ⊚ | ⊚ |
| | Moisture permeability P | | ⊚ | ⊚ | ⊚ | ⊚ |

**Table 2-2**

| | | | Compar ative Example 1 | Compar ative Example 2 | Compar ative Example 3 | Compar ative Example 4 | Compar ative Example 5 |
|---|---|---|---|---|---|---|---|
| | Second (meth)acrylic acid alkyl ester | 2EHA (C8) | 67 | 47 | 68 | 47 | 90 |
| | | nOcA (C8) | | | | | |
| | | iNA (C9) | | | | | |
| | | iDAA (C10) | | | | | |
| | | LA (C12) | | | | | |
| | First (meth)acrylic acid alkyl ester | BA (C4) | 30 | 50 | 30 | 50 | |
| | | iBA (C4) | | | | | |
| Monomer component (part(s) by weight) | | MMA (C1) | | | | | 10 |
| | Carboxyl group-containing monomer | AA | 3 | 3 | 3 | 3 | 4 |
| | Silane-based monomer | KBM-503 | 0.03 | 0.03 | 0.03 | 0.03 | 0.02 |
| Additive (part(s) by weight) | Chain transfer agent | 1-LSH | 0.02 | 0.02 | 0.02 | 0.02 | 0.03 |
| | Anionic emulsifier | KH-10 | 1 | 1 | 3 | 3 | 3 |
| | | SR-10 | | | | | |
| | Nonionic emulsifier | KN-30 | 4 | 4 | | | |
| | | ER-30 | | | | | |
| | Organic liquid component | COCONAD RK | | | 30 | 30 | 30 |
| Evaluation results | Appearance change | | × | × | ○ | ○ | ○ |
| | Amount of stratum corneum exfoliated | | × | × | × | × | × |
| | Moisture permeability P | | × | × | × | Δ | × |

Abbreviations in Tables 1 and 2 are as described below.
2EHA: 2-Ethylhexyl acrylate
nOcA: n-Octyl acrylate
iNA: Isononyl acrylate
iDAA: Isodecyl acrylate
LA: n-Dodecyl acrylate
BA: n-Butyl acrylate
iBA: Isobutyl acrylate
MMA: Methyl methacrylate
AA: Acrylic acid
KBM-503: 3-(Methacryloyloxy)propyltrimethoxysilane (KBM-503, manufactured by Shin-Etsu Silicone)
1-LSH: 1-Dodecanethiol
KH-10: Ammonium polyoxyethylene-1-(allyloxymethyl) alkyl ether sulfate (AQUALON KH-10, manufactured by DKS Co. Ltd.)
SR-10: Ammonium polyoxyethylene alkyl ether sulfate (ADEKA REASOAP SR-10, manufactured by ADEKA Corporation)
KN-30: Polyoxyethylene-1-(allyloxymethyl) alkyl ether (AQUALON KN-30, manufactured by DKS Co. Ltd.)
ER-30: Allyloxypolyoxyethylene (ADEKA REASOAP ER-30, manufactured by ADEKA Corporation)
COCONAD RK: Glyceryl tricaprylate (COCONAD RK, manufactured by Kao Corporation)

As can be seen from Tables 1 and 2, the pressure-sensitive adhesive sheet for evaluation produced by using the pressure-sensitive adhesive composition of each of Examples provided a better result regarding the evaluation of the amount of the stratum corneum exfoliated as compared to Comparative Examples, and was suitable for reducing the amount of the stratum corneum exfoliated.

The pressure-sensitive adhesive sheet produced by using the pressure-sensitive adhesive composition according to the at least one embodiment can be used by being attached to an object such as skin.

## Claims

1. A pressure-sensitive adhesive composition comprising:
a (meth)acrylic polymer containing
a constituent unit U1 derived from a first (meth)acrylic acid alkyl ester having an alkyl group having 1 to 7 carbon atoms,
a constituent unit U2 derived from a second (meth)acrylic acid alkyl ester having an alkyl group having 8 to 12 carbon atoms, and
a constituent unit U3 derived from a carboxyl group-containing monomer;
a nonionic emulsifier; and
an organic liquid component containing a carboxylic acid ester.

2. The pressure-sensitive adhesive composition according to claim 1, wherein a blending amount of the organic liquid component is from 40 parts by weight to 80 parts by weight with respect to 100 parts by weight of the (meth)acrylic polymer.

3. The pressure-sensitive adhesive composition according to claim 1 or 2, wherein the organic liquid component contains glyceryl tricaprylate.

4. The pressure-sensitive adhesive composition according to any one of claims 1 to 3, wherein the alkyl group of the second (meth)acrylic acid alkyl ester has 9 to 12 carbon atoms.

5. The pressure-sensitive adhesive composition according to any one of claims 1 to 4, wherein the second (meth)acrylic acid alkyl ester contains at least one selected from the group consisting of: 2-ethylhexyl acrylate; n-octyl acrylate; isononyl acrylate; isodecyl acrylate; and n-dodecyl acrylate.

6. The pressure-sensitive adhesive composition according to any one of claims 1 to 5, wherein the alkyl group of the first (meth)acrylic acid alkyl ester has 1 to 5 carbon atoms.

7. The pressure-sensitive adhesive composition according to any one of claims 1 to 6, wherein the first (meth)acrylic acid alkyl ester contains at least one selected from the group consisting of: n-butyl acrylate; and isobutyl acrylate.

8. The pressure-sensitive adhesive composition according to any one of claims 1 to 7, wherein the carboxyl group-containing monomer contains acrylic acid.

9. The pressure-sensitive adhesive composition according to any one of claims 1 to 8, wherein a content ratio of the constituent unit U3 in the (meth)acrylic polymer is from 2 wt% to 4 wt%.

10. The pressure-sensitive adhesive composition according to any one of claims 1 to 9, further comprising an anionic emulsifier.

11. The pressure-sensitive adhesive composition according to claim 10, wherein at least one selected from the group consisting of: the anionic emulsifier; and the nonionic emulsifier has a polymerizable group.

12. The pressure-sensitive adhesive composition according to claim 10 or 11, wherein at least one selected from the group consisting of: the anionic emulsifier; and the nonionic emulsifier has an oxyethylene group, and an average number of moles of the oxyethylene group added is 10 or more.

13. The pressure-sensitive adhesive composition according to any one of claims 10 to 12, wherein the anionic emulsifier contains an alkyl sulfate ester salt.

14. The pressure-sensitive adhesive composition according to any one of claims 1 to 13, wherein the nonionic emulsifier contains a polyoxyethylene-1-(allyloxymethyl) alkyl ether.

15. A pressure-sensitive adhesive sheet comprising a pressure-sensitive adhesive layer formed from the pressure-sensitive adhesive composition according to any one of claims 1 to 14.
